# EUROPÄISCHE PATENTSCHRIFT

(11) **EP 0 410 342 B1**
(45) Veröffentlichungstag und Bekanntmachung des Hinweises auf die Patenterteilung: **09.06.1993**
(21) Anmeldenummer: 90114066.5
(22) Anmeldetag: 23.07.1990
(51) Int. Cl.: B23D 77/04

(54) **Einmesser-Reibahle**
One insert reamer
Alésoir à une plaquette de coupe

(30) Priorität: 28.07.1989 DE 3924998
(43) Veröffentlichungstag der Anmeldung: 30.01.1991
(73) Patentinhaber: MAPAL Fabrik für Präzisionswerkzeuge Dr. Kress KG, D-73405 Aalen (DE)
(72) Erfinder:
(74) Vertreter: Gleiss, Alf-Olav, Dr.jur. Dipl.-Ing.

(56) Entgegenhaltungen:
- JP-A-60 204 687
- US-A- 2 977 829
- US-A- 3 274 863

## Beschreibung

Die Erfindung betrifft eine Einmesser-Reibahle mit einem eine Messerplatte und zwei Führungsleisten aufweisenden Messerkopf.

Es sind Einschneiden-Reibahlen mit einem Messerkopf bekannt, in den auf geeignete Weise, beispielsweise mittels einer Spannpratze, eine Messerplatte fest eingespannt ist. Am Umfang des Messerkopfs sind gegenüber der Messerplatte eine erste und -in Drehrichtung gesehen- hinter der Messerplatte eine zweite Führungsleiste aus Keramik vorgesehen.

Bei der Bearbeitung von Oberflächen mit Hilfe dieser bekannten Einmesser-Reibahlen werden zur Kühlung bzw. Schmierung Emulsionen eingesetzt, die einerseits der Kühlung der Schneide, andererseits auch der Kühlung aber insbesondere der Schmierung der Führungsleisten dienen. Die Entsorgung der mit dem Kühl-/Schmiermittel versetzten Späne ist, unter anderem aufgrund der verwendeten speziellen, der Emulsion beigesetzten Schmierstoffe, problematisch. Häufig bedarf es der Behandlung als Sondermüll. Das heißt, der bei der Bearbeitung von Oberflächen anfallende Abfall bedarf bei der Entsorgung einer besonderen Behandlung, die sehr kostenintensiv ist.

Es ist daher Aufgabe der Erfindung, eine Einschneiden-Reibahle zu schaffen, bei der bei gleichbleibendem Verschleiß der Führungsleisten die beim Stand der Technik auftretenden Nachteile vermieden werden.

Diese Aufgabe wird bei einer Einschneiden-Reibahle der eingangs genannten Art mit Hilfe der in Anspruch 1 genannten Merkmale gelöst. Die aus hoch verdichteter, heiß isostatisch gepreßter Mischkeramik bestehenden Führungsleisten zeichnen sich durch eine besonders porenarme Oberfläche aus. Überdies hat die Aluminiumoxid und Titankarbid enthaltende Keramik eine geringere Affinität zum Material der Bohrungswand, z.B. Guß oder Aluminium, als herkömmliche Materialien. Dadurch ist sichergestellt, daß sich -auch ohne Einsatz von fetthaltigen Kühl- bzw. Schmieremulsionen- Material der Wand der bearbeiteten Bohrung nicht an den Führungsleisten festsetzen und aufschweißen kann. Solche Aufschweißungen würden auch eine Bearbeitung bzw. einen Austausch der Führungsleisten erzwingen, das heißt, die Standzeit des Werkzeugs reduzieren. Die anfallenden Späne können wegen der Trockenbearbeitung der Oberflächen ohne besondere Reinigungsverfahren und ohne die teilweise aufwendige Rückgewinnung von Kühl- bzw. Schmiermitteln entsorgt werden.

Die aus der hier angesprochenen Mischkeramik bestehenden Führungsleisten zeichnen sich überdies dadurch aus, daß sie besonders unempfindlich gegenüber Stößen aber auch gegen Wasser sind. Da die Keramik härter als Hartmetall ist, wird der Verschleiß sehr stark reduziert, was ebenfalls zur Verbesserung der Lebensdauer der Führungsleisten und damit des Werkzeugs beiträgt.

Besonders bevorzugt wird eine Einschneiden-Reibahle mit Führungsleisten aus einer Mischkeramik, die Anteile von Aluminiumoxid und Titankarbid enthält, wobei der Titankarbidanteil vorzugsweise ≦ 10 % ausmacht. Derartige Führungsleisten zeichnen sich durch eine besonders hohe Standzeit aus.

Schließlich wird eine Weiterbildung einer Einschneiden-Reibahle bevorzugt, bei der die Führungsleisten mittels Klebstoff in im Messerkopf vorgesehenen Nuten befestigt sind. Eine derartige Anbringung der Führungsleisten ist damit relativ einfach und preiswert.

Wenn die Oberflächen der Führungsleisten durch Schleifen, vorzugsweise durch Diamantschleifen bearbeitet werden, ist es möglich, auch Bohrungen in Werkstücken aus Guß- und Buntmetall ohne Kühlmittel zu bearbeiten. Die Trockenbearbeitung ist hier des halb möglich, weil weniger Wärme über die Führungsleisten aufgenommen und dadurch die Aufschweißneigung vermindert wird.

Die Erfindung wird im folgenden anhand der ein Ausführungsbeispiel wiedergebenden Zeichnung näher erläutert. Es zeigen:
- Figur 1: eine Seitenansicht einer Einschneiden-Reibahle;
- Figur 2: eine Vorderansicht einer Einschneiden-Reibahle gemäß Figur 1;
- Figur 3: einen Querschnitt entlang der in Figur 1 eingezeichneten Linie III-III und
- Figur 4: einen Querschnitt durch die in Figur 1 dargestellte Reibahle entlang der Linie IV-IV.

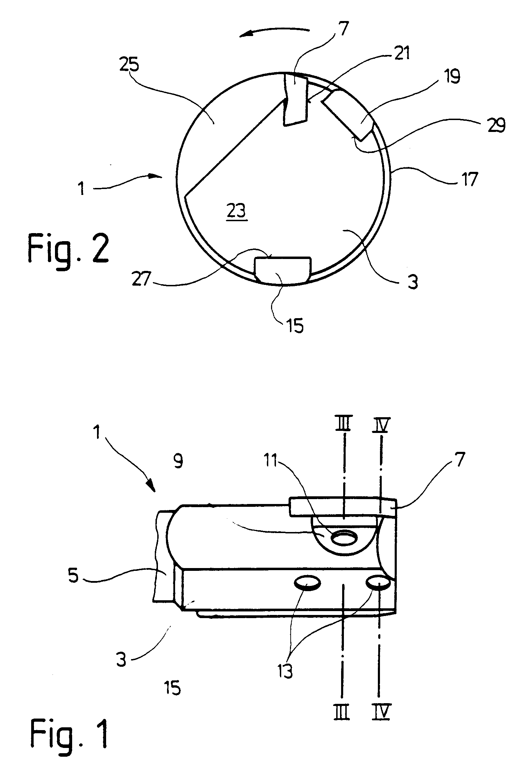

Figur 1 zeigt eine Seitenansicht einer Einschneiden-Reibahle 1 mit einem Messerkopf 3 und einem sich daran anschließenden Schaft 5. In dem Messerkopf ist eine Messerplatte 7 auf geeignete Weise festgespannt, hier mittels einer Spannpratze 9, die von einer Spannschraube 11 gehalten wird. Die Messerplatte 7 ist radial einstellbar und zwar mit Hilfe zweier Einstellglieder 13. Am Umfang des Messerkopfs 3 befindet sich eine erste Führungsleiste 15, die der Messerplatte 7 gegenüberliegt.

In der Vorderansicht gemäß Figur 2 sind gleiche Teile mit gleichen Bezugszeichen versehen. Bei dieser Darstellung ist zusätzlich die Umfangslinie 17 einer zu bearbeitenden Bohrung eingezeichnet.

Der Messerplatte 7 ist -in der durch einen Pfeil dargestellten Drehrichtung gesehen- eine zweite Führungsleiste 19 nachgeordnet, die in die Außenwand des Messerkopfs 3 eingebracht ist.

Auf der Vorderseite der in einer Nut 21 liegenden Messerplatte ist der Grundkörper 23 des Messerkopfs 3 entlang einer Kreissehne abgetragen, so daß ein der Spanabfuhr dienender Spanraum 25 entsteht.

Aus der Darstellung ist erkennbar, daß die erste Führungsleiste 15 in einer ersten Nut 27 und die zweite Führungsleite 19 in einer zweiten Nut 29 angeordnet sind.

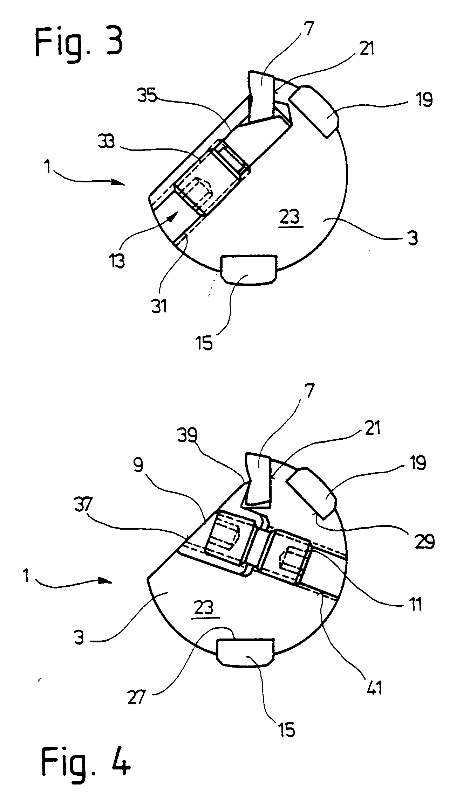

Aus dem Querschnitt gemäß Figur 3 sind die Anordnung und der Aufbau der Einstellglieder 13 genauer ersichtlich. Sie weisen eine in einer in den Grundkörper 23 eingebrachten, mit einem Innengewinde versehenen Bohrung 31 verschiebbar angeordnete Stellschraube 33 sowie einen mit dieser zusammenwirkenden Stellkeil 35 auf. Der ebenfalls in der Bohrung 31 angeordnete, im wesentlichen zylindrische Stellkeil 35 weist auf einer Seite eine Abschrägung auf, die in Eingriff steht mit der Unterseite der in der Nut 21 angeordneten Messerplatte 7. Aus Figur 3 ist ersichtlich, daß die Messerplatte 7 weiter aus der Umfangslinie des Messerkörpers 3 herausgeschoben wird, wenn die Stellschraube weiter in die Bohrung 31 hineingeschraubt wird, wodurch der Stellkeil 35 weiter in Richtung auf die Messerplatte 7 verschoben wird.

Aus dem Querschnitt gemäß Figur 4 ist ersichtlich, daß die Spannpratze 9 so ausgebildet ist, daß ihre Oberfläche 37 mit der Außenfläche des Messerkopfs 3 im Bereich des Spanraums 25 fluchtet. Die Spannpratze 9 stützt sich mit einer Spannlippe 39 auf der Vorderseite der Messerplatte 7 ab, so daß diese mit ihrer Rückwand gegen eine Schulter der Nut 21 gepreßt und so sicher gehalten wird.

Die Spannpratze 9 wird durch die Spannschraube 11 im Grundkörper 23 des Messerkopfs gehalten, wobei die Spannschraube einerseits mit einem Innengewinde in der Spannpratze 9 und andererseits mit einem Innengewinde kämmt, das in einer Bohrung 41 im Grundkörper 23 des Messerkopfs 3 vorgesehen ist.

Die Führungsleisten 17 und 19 sind in im Messerkopf eingebrachten Nuten 27 und 29 mittels eines Klebstoffs befestigt. Es ist darauf zu achten, daß der Boden der Nuten glatt und eben ist, damit die Führungsleisten möglichst gleichmäßig abgestützt werden und nicht aufgrund der bei der Bearbeitung von Bohrungen entstehenden Kräfte zerbrechen.

Die Führungsleisten bestehen aus hoch verdichteter, heiß isostatisch gepreßter Mischkeramik, die sich dadurch auszeichnet, daß sie Aluminiumoxid und Titankarbid enthält, wobei ein Mischungsverhältnis bevorzugt wird, das weniger als 10 % Titankarbid enthält.

Die Oberflächen derartiger Führungsleisten zeichnen sich durch eine besondere Porenarmut aus, das heißt, sie sind praktisch porenfrei. Dadurch haben sie weit weniger als bekannte Keramik-Führungsleisten oder gar Hartmetall-Führungsleisten die Tendenz zum Aufschweißen, das heißt, Material der bearbeiteten Bohrungswand setzt sich nicht so leicht auf den Führungsleisten ab. Daher kann bei der Bearbeitung von Bohrungen auf Kühl- und Schmiermittel verzichtet werden, ohne daß die Oberflächenqualität oder Maßhaltigkeit der hergestellten Bohrungen nachteilig beeinflußt würde. Auch werden aufgrund der reduzierten Aufschweißneigung Nachbearbeitungszeiten deutlich reduziert. Der wesentlichste Gesichtspunkt ist jedoch, daß die bei der Überarbeitung von Oberflächen anfallenden Späne ohne weiteres entsorgt werden können. Es bedarf keinerlei Nachbehandlung des anfallenden Abfalls, da Verunreinigungen durch im Schmiermittel vorhandene Fette nicht auftreten können, die häufig eine besondere Aufarbeitung und Lagerung des Abfalls erzwungen haben.

Die Oberfläche der Führungsleisten weist einen Krümmungsradius auf, der etwas kleiner ist als der der zu bearbeitenden Bohrungswandung 17. Die Oberfläche der Führungsleisten ist durch Schleifen, insbesondere durch Diamantschleifen bearbeitet, so daß sich eine sehr glatte Oberfläche ergibt, die aufgrund der hier verwendeten speziellen Keramik besonders wenig Poren aufweist bzw. praktisch porenfrei ist. Es ergibt sich eine Oberflächengüte von R_{Z} < 1µm vorzugsweise von < 0,5 µm.

Grundsätzlich wurde davon ausgegangen, daß Poren in der Oberflache der Führungsleisten von Vorteil sein könnten, beispielsweise zur Mitnahme und Aufnahme von Kühl- und Schmiermitteln. Aus Gründen des Umweltschutzes werden mehr und mehr Emulsionen verwendet, die sehr wenig Öl enthalten. Dadurch wurden die Schmierungseigenschaften wesentlich verringert und die Standzeit der Führungsleisten bzw. des Werkzeugs stark verkürzt.

Die hier verwendeten Führungsleisten haben eine derartig glatte Oberfläche, daß Kühl- und Schmiermittel kaum noch mitgenommen werden. Dennoch kann, insbesondere beim Einsatz von diamantgeschliffener Schneidkeramik, beispielsweise bei der Bearbeitung von Bohrungen in Werkstücken aus Guß- und Buntmetall auf derartige Mittel verzichtet werden, ohne daß die Oberflächengüte oder Maßhaltigkeit der bearbeiteten Bohrung nachteilig beeinflußt würde. Damit wird die Entsorgung der anfallenden Späne, wie gesagt, wesentlich vereinfacht.

Durch den Einsatz der hier beschriebenen Keramik-Führungsleisten ergibt sich noch einer weitere Ersparnis dadurch, daß auf Kühl- und Schmiermittel bei der Bearbeitung von Bohrungen verzichtet werden kann.

Die Wärmeleitfähigkeit der Keramik-Führungsleisten ist wesentlich geringer als die von Hartmetall-Führungsleisten. Dadurch findet eine Wärmeisolation statt, die dazu führt, daß der Werkzeugkörper kühler bleibt als bei herkömmlichen Reibahlen. Die thermische Belastung des Werkzeugs wird folglich reduziert. Die Wärmeisolation wird noch dadurch gefördert, daß die Führungsleisten vorzugsweise dikker gewählt werden als dies bei Hartmetalleisten der Fall ist. Aufgrund der Sprödigkeit des Materials wurde bei zu dünnen Führungsleisten das Einbringen und Befestigen der Führungsleisten in den Nuten erschwert, weil die Leisten sonst leicht brechen.

## Patentansprüche

1. Einmesser-Reibahle mit einem eine Messerplatte und zwei Führungsleisten aus Keramik aufweisenden Messerkopf, **dadurch gekennzeichnet**, daß die Führungsleisten (15, 19) aus hochverdichteter, heiß isostatisch gepreßter Mischkeramik bestehen, die Aluminiumoxid und Titankarbid enthält.

2. Einmesser-Reibahle nach Anspruch 1, **dadurch gekennzeichnet**, daß der Titankarbidanteil 10% und weniger ausmacht.

3. Einmesser-Reibahle nach Anspruch 1 oder 2, **dadurch gekennzeichnet**, daß die Führungsleisten (15, 19) mittels Klebstoff in Nuten (27, 29) befestigt sind, die in den Grundkörper (23) des Messerkopfs (3) eingebracht sind.

4. Einmesser-Reibahle nach einem der Ansprüche 1 bis 3, **dadurch gekennzeichnet**, daß die Oberflächen der Führungsleisten (15, 19) geschliffen, vorzugsweise diamantgeschliffen sind.

## Claims

1. A single-blade reamer with a blade head comprising a blade plate and two guide strips made of ceramic, **characterised in that** the guide strips ( 15, 19) consist of highly compressed mixed ceramic which has been pressed isostatically at a high temperate and contains aluminium oxide and titanium carbide.

2. A single-blade reamer according to Claim 1, **characterised in that** the proportion of titanium carbide amounts to 10% or less.

3. A single-blade reamer according to Claim 1 or 2, **characterised in that** the guide strips (15, 19) are secured by means of adhesive in grooves (27, 29) inserted into the base (23) of the blade head (3).

4. A single-blade reamer according to any one of Claims 1 to 3, **characterised in that** the surfaces of the guide strips (15, 19) are ground, preferably diamond-ground.

## Revendications

1. Alésoir monocoupe dont la tête de coupe porte une plaquette et deux patins de guidage en céramique, caractérisé en ce que les patins de guidage (15, 19) sont faits d'une céramique composite hautement compactée obtenue par compression isostatique à chaud et contenant de l'oxyde d'aluminium et du carbure de titane.

2. Alésoir monocoupe selon la revendication 1, caractérisé en ce que la teneur en carbure de titane ne dépasse pas 10%.

3. Alésoir monocoupe selon la revendication 1 ou 2, caractérisé en ce que les patins de guidage (15, 19) sont fixés au moyen d'un adhésif dans des rainures (27, 29), qui sont pratiquées dans le corps de base (23) de la tête de coupe (3).

4. Alésoir monocoupe selon la revendication 1 ou 2, caractérisé en ce que les surfaces des patins de guidage (15, 19) sont rectifiées, de préférence à la meule diamantée.
